# EUROPEAN PATENT APPLICATION

(11) **EP 1 609 370 A1**
(43) Date of publication of application: **28.12.2005**
(21) Application number: 05425352.1
(22) Date of filing: 20.05.2005
(51) Int. Cl.: A23F 5/46, A23F 5/14

(54) **Alimentary product in powder form composed of coffee and medicinal herbs from which a healthy drink of Italian espresso coffee or other type can be produced**

(30) Priority: 21.06.2004 IT TE20040008
(71) Applicant: Micioni, Giulio Valter, 64100 Teramo (IT)
(72) Inventor: Micioni, Giulio Valter, 64100 Teramo (IT); Irina, Tanina, 64100 Teramo (IT)

(57) **Abstract**

The present invention relates to an alimentary product based on coffee and officinal herbs.

## Description

### Technical field and background art

There are lots of national and international patents all over the world regarding alimentary products of every type having the objective to improve the human physical and mental well-being.

In the past the foods were more integral, less refined and worked so the indispensable oligoelements for our organism were found directly in the daily intake.

Now it is any more so and thus in the developed countries millions of people are more and more entrusted, in several shapes and depending on the local habits, with functional, modified, enriched, vitaminized foods and with dietetic, adaptogenic, stimulating, slimming, energetic integrators and so on.

In the last years, in fact, the same concept of health is evoluted from simple "absence and prevention of a pathology" to "psycho-physical well-being", meant like "to be well with itself'. The consumers wish to be ever more informed about that can contribute to their well-being. In order to be always fit, they feel the need to purchase the above mentioned products.

The Companies answer to this requirement with diligence but, truth to tell, with an excessive emphasis relating to the advertising communication.

The role of so-called "officinal herbs" in the human use is sure important. It is constantly increasing in the world, but the consumers became frequently dupes of advertising communications and of new fashions. In this way it would be desirable a more careful control, a more correct information and stricter laws. We hope that shortly there will be a European normative regulation concerning officinal herbs in order to clear the market of uncontrolled, in some cases dangerous formulas, and of false improbable promises.

However, assuming that the herbal formula of a product to ingest is safe, as it is in case of the present invention, during the assumption of any useful well-being product appears the following problem: to have the ability to change our habits and at the same time to remind us to do something alien to our habits. Everybody knows how much is difficult to allow to begin a new habit but it is even more difficult to be constant in it.

In fact, happens easily that we should take a capsule of a dietetic integrator (for ex.: three times a day before meals), or prepare an infusion (for ex.: one cup after the main meals) or do the prescribed gym exercises, etc. Well, at the end of the day (week) we understand to have skipped something important, to have not done the things as we have planned.

Moreover all these products, it is not very clear why, are very expensive and few of us can buy them every time we need (there is no regulation regarding these products and they are a large business for producers, pharmacies and herbal shops, the profits are enormous and after all who pays dearly is the consumer.

### Disclosure of invention

The main innovation of the present invention is to give to the lovers of the most popular drink in the world (after the water and the tea) a new product that, conserving all the pleasure and the taste of a coffee, gives also a greater contribution to our general psycho-physical well-being as distinct from usual coffee. As regards to the taste, it has been organized a tasting of the product among 50 persons of different age (from 20 to 70 years old). Only 2 of them have declared that the drink was not to their liking and the 68% have said that they would prefer it to their usual espresso coffee.

The present invention has its value as a research of a new taste and of a new formula for an alimentary product of wide consumption. Furthermore it has also in addition an intrinsic value proceeding from the idea from which it comes. The idea of the inventors has been the following: to give to everybody something surely healthy (except for the people affected by the usual contraindications for the use of coffee, like arterial hypertension and cardiac arrhythmia) introducing in their daily stable pleasant habits a product with similar cost to the usual cup of coffee but even more delicious like "the Italian healthy espresso coffee". Those who according to the local traditions are not accustomed to the Italian espresso, can drink this healthy coffee in their own traditional way (Turkish coffee, American coffee, etc.).

### Mode to carrying out the invention

The inventors, for every local tradition, have calculated the formulation of the product keeping well in mind the way of preparation, the average amount of drink in millilitres in the cup (the American coffee, for example, is of about 200 millilitre) and the concentration of extracted active principles for every method used.

With this purpose the herbal ingredients have been selected ad hoc and in the adequate state for the best extraction of their active principles through short boiling (Turkish coffee), fall down of hot water through paper filter (American coffee), machines for Italian espresso, Italian moka-pot, Italian Neapolitan coffee-pot, etc.

However, the main method of preparation, to which the inventors have more worked and from which the idea of the present invention has come, is that one of the infusion obtained using the Italian espresso coffee machine. For the tests we have used a semi-automatic two groups machine of a famous Italian brand, according to the ancient tradition of the famous 4 M (optimal Mixture, optimal Milling, clean and efficient Machine, expert Hand ― "Mano" in Italian language).

We have added natural herbal ingredients like under described and therefore, if you want, a fifth M, that one of new Fashion - "Moda" in Italian language - relative to a HEALTHY espresso coffee that renews the great Italian tradition.

All the herbal ingredients used in the present invention are in right amounts in order to satisfy the last guidelines prescribed by the Ministry of Health of Italy in the field of the alimentary integrators. It means the respect of the "upper safe level" (the UL), relatively to a daily maximum intake of 6/7 cups of healthy espresso coffee prepared with the classic dose of 7 grams of ground coffee for cup (2 or 3 cups of healthy espresso are suggested daily).

Particular attention has been placed in the granulometric size of the single ingredients so that to obtain a usual quantity of espresso coffee (neither strong nor aqueous) with a duration of extraction in espresso machine of about 20-25 second. This length of time is considered ideal by the best baristas.

And moreover the above mentioned granularity specifically calculated for every ingredient allows to receive the following advantages:
A) No problem in the machine filter (unlike other compositions as, only for example, patent WO 99/39587 ― PCT/IT9900014 "Alimentary product based on coffee, cocoa and guardian"), where we have verified that the mixture can choke up the machine filter. In truth the inventor only hints at the use of his invention with the espresso machines);
B) Improved extraction of the active principles of the herbal ingredients during the passage of water through the filter: all the ingredients , like it will be described, are treated opportunely to this purpose;
C) No problem of agglomeration of the ingredients in the coffee bags (sale unit) for merit of a proper packing.

Here are not described the wholesome properties of the single herbal ingredients since they are well known by the international scientific community, but is only desired to call special attention on the following points:
- that in the experiments have been used (as they will be used in the industrial product) herbal ingredients (official herbs) carefully selected for their wide and recognised well-being and not therapeutic effects (like prescribed by the Ministry of Health of Italy), coming from cultivations and Companies of asserted reputation. There were not absolutely used herbal ingredients that for their nature can be sold only in pharmacies (Circular 3 of the 18 July 2002 of the Min. of Health of Italy).
- that the inventors have long experimented different formulations for the product described in the title, coming to the conclusion that the below mentioned formula answers better to the initial idea from which proceeds the invention. This idea is to create a beverage really innovative because it will be available for everybody and will create a new habit proceeding from the following reasons:
   - pleasant to drink in coffee-house and everywhere;
   - delicious and with an incomparable and long durable aroma/taste like aftertaste in the palate;
   - salutary for our psycho-physical well-being because of the synergic effects of the single ingredients;
   - drunk cold, it can be an optimal herbal alcohol-free "liquor" aperitif/digestive (this peculiarity was really unexpected, but it has been casually verified by our tasters);
   - at last, very important thing, it was formulated keeping in mind its unlimited use in the time by all the healthy adults without particular and serious pathologies (naturally, the label will contain all the necessary information ordered by the current laws).

Formula of the present invention (the percentage are intended like volume on the total of the product and are calculated to the term of the production process):
1 ― A blend of coffee produced with so-called sweet roasting consisted of 80% of Coffea Arabica and 20% of Coffea Robusta (the percentage of Arabica 80% is used for its low content in caffeine due the healthy objective of the beverage; 20% of Robusta is used instead to give more body and tone to the beverage exalting the harmony of its taste): 80% ;
2 - Citrus Aurantium Amara (Bitter Orange, peel of the fruit, dry extract containing 4% of synephrine. For example: according to the last recommendation of the Ministry of Health of Italy the maximum suggested daily intake of synephrine should not exceed the 30 mg/day corresponding to aprox. 800 mg of Citrus Aurantium Amara with 4% in synephrine): 1.5% (corresponding to aprox. 100 mg of synephrine for every dose of 7 grams of product) ;
3 - Citrus Sinensis Dulcis (Sweet Orange, peel of fruit): **2%** ;
4 - Zingiber Officinalis (Ginger, powder): **0.8%** ;
5 - Mentha Piperita (Peppermint, leaves): **3%** ;
6 - Glycyrrhiza Glabra (Liquorice, flayed radishes): **3%** ;
7 - Elettaria Cardamomum (Cardamom, green flayed seeds): **0.3%** ;
8 - Ilex Paraguayensis (Yerba Mate, leaves): **3%** ;
9 - Cinnamomum Ceylanicum (Cinnamon, barks): **1.6%** ;
10 - Caryophillus Aromaticus (Cloves, flowers): **0.1%** ;
11 - Thea Sinensis (not fermented Chinese green tea, leaves and apex gems): **4%** ;
12 - Pimpinella Anisum ( Green Anise, fruits): **0.1%** ;
13 - Carum Carvia (Caraway, seeds): **0.1%** ;
14 - Lippia Tryphilla (Lemon-scented verbena, leaves and flower tops): **0.5%** .

### Production and packing of the product

Considering the particular delicacy of the herbal ingredients, an important part of the industrial realization of this invention is to find and purchase the suitable raw materials at certified and reliable industries. Moreover the industrial mill system, similar in part to the usual equipment of a roasting coffee/barley plant, will have to preview opportune modifications to the system in order to adapt it to the new raw material used. In order to observe the hygienic norms and quality assurance, each component of the product will be subject to strict control, selection, cleaning and washing if necessary, brought to the necessary degree of humidity and milled. In the course of the milling, in order to obtain powders for moka, for espresso, for pods or for filter paper, specific controls will be done to monitor the granulometric size required by every herbal ingredient, always correspondent to the technical requirements established previously by quality system.

The special attention is called to the degree of humidity of the ingredients in order to avoid problems of durability, agglomeration and of other nature.

The powders of each single ingredient will then be mixed carefully with the help of a control software and then packed in modified atmosphere in paper/aluminium bags suitable for the contact with foods and air-tight.

The final check will comprise a close organoleptic examination of the product.

Special attention will be given to the taste, aroma and acidity (the product will be also tasted with sugar) and to the wealth, complexity and perfect equilibrium of all the components.

## Claims

1. An alimentary product based on coffee and officinal herbs **characterized by** an innovative useful to health formula in the field and in the usage of the Italian espresso coffee.

2. An alimentary product, according to claim 1, **characterized by** an innovative useful to health formula in the field and in the usage of coffee using a Moka coffee maker.

3. An alimentary product, according to claim 1, **characterized by** an innovative useful to health formula in the field and in the usage of coffee using other ways of preparation: infusion for American style coffee, short boiling for Turkish style coffee and so on.

4. An alimentary product, according to claims 1, 2, 3, based also on decaffeinated coffee.

5. An alimentary product, according to claims 1, 2, 3, 4, which is used cold and sweetened as non-alcoholic aperitif or digestive liquor.

6. An alimentary product, according to claims 1, 2, 3, 4, 5, which is widespread and understood with a new concept, that one of Italian HEALTHY espresso coffee and generally in the countries with other coffee culture it is meant as American style HEALTHY coffee, Turkish style HEALTHY coffee, etc.

7. A herbal alimentary product, according to claims 1, 2, 3, 4, 5, 6, in which is essential the salutary concept about a daily, safe and healthy use, without changing the widespread habit to drink coffee.

8. An alimentary product, according to claims 1, 2, 3, 4, 5, 6, 7, in which the formula described in the present invention can be undergone to substantial changes.

9. An alimentary product, according to claims 6 and 7, in which the formula described in the present invention can be undergone to substantial changes deriving from progress of scientific and technical knowledge and/or changes of conditions of market and/or adaptation of consumer's tastes.

10. An alimentary product, according to the description of the present invention, which has pleasant and innovative aroma and taste unusual compared with the habitual coffee.

11. An alimentary product, according to the description of the present invention, which packing could differ from the mentioned 7 g. bags, as, for example, vacuum-packing , paper pods, etc.

12. An alimentary powder product based on coffee and officinal herbs, according to the description of the present invention, **characterized by** its benefits for the health sold in places of public catering and to be sold everywhere except for pharmacies.
